# EUROPEAN PATENT SPECIFICATION

(11) **EP 1 807 773 B1**
(45) Date of publication and mention of the grant of the patent: **13.01.2010**
(21) Application number: 04822349.9
(22) Date of filing: 05.11.2004
(51) Int. Cl.: G06F 17/30

(54) **METHOD AND APPARATUS FOR PREFERENCE BUILDING TO BE USED IN SERVICE DISCOVERY**
VERFAHREN UND VORRICHTUNG ZUM PRÄFERENZAUFBAU ZUR VERWENDUNG BEIM FINDEN VON DIENSTEN
PROCEDE ET APPAREIL POUR CONSTRUCTION DE PREFERENCES A UTILISER DANS LA DECOUVERTE DE SERVICES

(43) Date of publication of application: 18.07.2007
(73) Proprietor: NTT DoCoMo, Inc., Chiyoda-Ku Tokyo 100-6150 (JP)
(72) Inventor: WAGNER, Matthias, 80999 Muenchen (DE); KELLERER, Wolfgang, 82256 Fuerstenfeldbruck (DE); LIEBIG, Thorsten, 89075 Ulm (DE); NOPPENS, Olaf, 89081 Ulm (DE); BALZER, Steffen, 89077 Ulm (DE)
(74) Representative: Betten & Resch
(86) International application number: PCT/EP2004/052822
(87) International publication number: WO 2006/048046

(56) References cited:
- BALKE W T ET AL: "Through different eyes: assessing multiple conceptual views for querying web services" PROCEEDINGS OF THE 13TH INTERNATIONAL CONFERENCE ON WORLD WIDE WEB - ALTERNATE TRACK PAPERS, 17 May 2004 (2004-05-17), pages 196-205, XP002320718 NEW YORK, USA Retrieved from the Internet: URL:http://www.l3s.de/~balke/paper/www04.p df> [retrieved on 2005-03-09]
- KELLERER W ET AL: "Preference-based Session Management for Personalized Services" PROCEEDINGS OF THE MOBILE MULTIMEDIA COMMUNICATIONS CONFERENCE 2003, 6 October 2003 (2003-10-06), XP002320717 MUNICH, GERMANY Retrieved from the Internet: URL:http://www.docomoeurolabs.de/pdf/publi cations/FNL_preference_based_session_03.pd f> [retrieved on 2005-03-09]
- BALKE W T ET AL: "Towards Personalized Selection of Web Services" PROCEEDINGS OF THE TWELFTH INTERNATIONAL WORLD WIDE WEB CONFERENCE, 20 May 2003 (2003-05-20), XP002320716 BUDAPEST, HUNGARY Retrieved from the Internet: URL:http://www.docomoeurolabs.de/pdf/publi cations/FNL_towards_personalized_selection _03.pdf> [retrieved on 2005-03-09] cited in the application
- KIESSLING W ET AL: "Preference SQL-design, implementation, experiences" PROCEEDINGS OF THE TWENTY-EIGHTH INTERNATIONAL CONFERENCE ON VERY LARGE DATA BASES, 20 August 2002 (2002-08-20), pages 990-1001, XP002320719 HONG KONG, CHINA ISBN: 1-55860-869-9 Retrieved from the Internet: URL:http://www.vldb.org/conf/2002/S30P03.p df> [retrieved on 2005-03-09]
- MAEDCHE A ET AL: "Ontologies for enterprise knowledge management" IEEE INTELLIGENT SYSTEMS IEEE USA, vol. 18, no. 2, March 2003 (2003-03), pages 26-33, XP002320720 ISSN: 1094-7167 Retrieved from the Internet: URL:http://ieeexplore.ieee.org/iel5/5254/2 6843/01193654.pdf?arnumber=1193654> [retrieved on 2005-03-09]
- OUWERKERK A ET AL: "Visualizing RDF Data for P2P Information Sharing" WORKSHOP ON VISUALIZING INFORMATION IN KNOWLEDGE ENGINEERING 2003 AT 2ND INTERNATIONAL CONFERENCE ON KNOWLEDGE CAPTURE, 25 October 2003 (2003-10-25), XP002320721 SANIBEL ISLAND, FL, USA Retrieved from the Internet: URL:http://citeseer.ist.psu.edu/cache/pape rs/cs/31620/http:zSzzSzwww.cs.vu.nlzSz~hei nerzSzpubliczSzVIKEfinal.pdf/visualizing-r df-data-for.pdf> [retrieved on 2005-03-09]
- HYVÖNEN E ET AL: "Intelligent Image Retrieval and Browsing Using Semantic Web Techniques A Case Study" PAPER PRESENTED AT THE INTERNATIONAL SEPIA CONFERENCE, 18 September 2003 (2003-09-18), XP002320722 HELSINKI, FINLAND Retrieved from the Internet: URL:http://www.knaw.nl/ecpa/sepia/conferen cePapers/hyvonen.pdf> [retrieved on 2005-03-09]
- VDOVJAK R ET AL: "EROS: A User Interface for the Semantic Web" PROCEEDINGS OF THE 7TH WORLD MULTICONFERENCE ON SYSTEMICS, CYBERNETICS AND INFORMATICS, 27 July 2003 (2003-07-27), XP002320723 OLRANDO, FLORIDA, USA Retrieved from the Internet: URL:http://wwwis.win.tue.nl/~hera/papers/S CI2003/vdovjak.pdf> [retrieved on 2005-03-09]
- COUCHOT A: "Improving Web Searching Using Descriptive Graphs" PROCEEDINGS OF THE 9TH INTERNATIONAL CONFERENCE ON APPLICATIONS OF NATURAL LANGUAGE TO INFORMATION SYSTEMS, 23 June 2004 (2004-06-23), pages 276-287, XP002320724 SALFORD, UK Retrieved from the Internet: URL:http://www.springerlink.com/media/274P VMLVXH73FEG2DR2P/Contributions/F/4/B/1/F4B 12Y7CD12M52NN_html/BodyRef/PDF/558_1101927 5_Chapter_24.pdf> [retrieved on 2005-03-09]

## Description

### FIELD OF THE INVENTION

The present invention rotates to a method and an apparatus for preference building to be used for semantic based service discovery.

### BACKGROUND OF THE INVENTION

Among the most attractive resources of the future Web will be those that provide actual services. By "services" there are meant mean Web resources that do not merely provide static information but allow the user to effect some action or change in the world. In particular, the vision of the Semantic Web strongly depends on semantic-based services that enable users and software agents to discover, invoke, compose, and monitor network services. Using Web-based services has already become an integral part of our everyday life. Semantic Web technology and the advent of universal and mobile access to Internet services will only add to the broad range of existing services on the Web and provide additional features like knowledge-based, location- or context-aware information. In order to keep this increasing amount of (mobile) services manageable, it is essential that users are supported in the discovery and selection of services they personally need in a given situation or context.

Even though the capabilities of today's Web-based services are still relatively simple, their sophistication and diversification will grow with the improvement of (wireless) networks, bandwidths, and client device capabilities. Consequently, finding the adequate services will become a more and more demanding problem for the individual user. It is therefore desirable that making an informed choice of the right service will essentially include matching the individual user's preferences and dislikes against the services offered in a given situation or context. A concept of user-centered Web service discovery is described in W.-T. Balke and M. Wagner, Cooperative Discovery for user-centered Web Service Provision, in Proceedings of the International Conference on Web Services, ICWS '03, June 23 - 26, 2003, Las Vegas, Nevada, USA. CSREA Press 2003, ISBN 1-892512-49-1, and further in W.-T. Balke and M. Wagner, Towards Personalized Selection of Web Services, in Proceedings of the 12th International World Wide Web Conference (WWW 2003), Budapest, Hungary, ACM, 2003

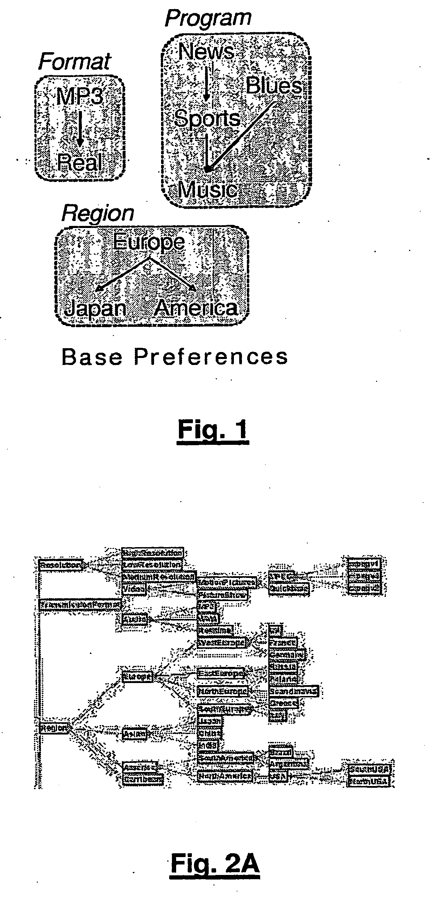

Therein it is described how services can be discovered and selected based on user preferences. Thereby, user preferences are expressed in terms of service feature orderings. User preferences are introduced as a special relation with the semantics of considering some object (or class) A superior to another object (or class) B ("I like A better than B"). Such criteria can then be applied when searching for services, either as "hard constraints" which in any case have to be fulfilled by the results, or as "soft constraints" which may be relaxed according to some predefined scheme. Fig.1 shows a set of sample preferences in a Radio scenario where the service repository from which a service may be discovered contains different kinds of Radio programs. Here a user indicates that she generally prefers radio programs from Europe over those from Japan or America. Still, the latter two choices are her preferred choices over any other available program.

It is an object of the present invention to provide a tool for intuitively and efficiently building preferences in complex environments which are difficult to be completely overlooked by the user.

BALKE W T ET AL:"Through different eyes: assessing multiple conceptual views for querying web services" PROCEEDINGS OF THE 13TH INTERNATIONAL CONFERENCE ON WORLD WIDE WEB - ALTERNATE TRACK PAPERS, 17 May 2004 (2004-05-17), - 20 May 2004 (2004-05-20) pages 196-205, XP002320718 NEW YORK, USA discloses user preferences being used in the area of web services together with service ontologies in order to perform discovery and selection of a web service. Based on defined preferences there is disclosed a relaxation mechanism to apply the defined contrains in a relaxed manner.

KELLERER W ET AL: "Preference-based Session Management for Personalized Services" PROCEEDINGS OF THE MOBILE MULTIMEDIA COMMUNICATIONS CONFERENCE 2003, 6 October 2003 (2003-10-06), - 8 October 2003 (2003-10-08) XP002320717 MUNICH, GERMANY discloses preference-based session management for personlized services. Conventional service management is extended by introducing a preference order on the available service features according to the specific demands of a user.

### SUMMARY OF THE INVENTION

The present invention is defined in the independent claims. The dependent claims define embodiments of the invention.

There is provided a method for providing a user interface for enabling a user to define preferences which are to be used for the discovery of services from a service catalogue, said services being categorized according to an ontology assigning one or more attributes to the individual services, said method comprising:
providing an ontology viewer for displaying said ontology as a graph, the nodes in said graph corresponding to attributes in said ontology, said ontology viewer allowing said user to navigate through said ontology;
receiving a user input from said user when navigating through said ontology for selecting one or more nodes as preferences to thereby define attributes which are preferred attributes of the desired services to be discovered.

The combination of an ontology viewer for navigating through the ontology and the reception of a user input when navigating through the ontology provides a particularly easy to use way of defining preferences. Moreover, the preferences are defined in a view which actually represents the structure of the available service space, and accordingly it may be used in an intuitive manner without explicit knowledge about the structure of available attributes and services.

The method further comprises:
constructing and dispatching a query to discover said desired services based on said selected preferred attributes. The selected preferences may then be easily applied to generate a service query because they essentially formulate a user's wishes and dislikes.

The method further comprises:
providing a graphical user interface for receiving a user input for defining a priority relationship between one or more of said selected nodes to define preferences.

Defining priority relationships amongst base preferences allows the definition of more complex preference structures than merely selecting individual attributes as being preferred.

According to one embodiment said defined relationship is either prioritizing one of said nodes against another one or assigns equal priority to them.

The distinction between equal prioritization and different priorities for defined preferences allows a more refined definition of user preferences.

According to one embodiment the defined relationship is definable also between already defined preferences to thereby define combined preferences. This allows complex structures of preference definitions.

According to one embodiment a combined preferences graph is derived from said combined preferences to represent said combined preferences in a single graph the nodes of which represent preference combinations having the same priority. Through the combined preference graph complex preferences can be constructed that ere easily overlooked as separate base preferences at the client side.

According to one embodiment the combined preferences graph defines the relaxation path in case of no or no sufficient match being retrieved for the defined preferences.

According to one embodiment the method further comprises:
shrinking the nodes distant from the node being the navigation focus and expanding nodes of said ontology close to said navigation focus when displayed by said ontology viewer.

This allows the use of the ontology viewer even on small displays such as mobile phones.

The method further comprises:
tracking the navigation of the user through said ontology,
automatically generating preferences based on said tracked user navigation.

This enables the automatic adaptation of the preferences based on the user behaviour thereby automatically improving the system performance without explicit user input.

The method further comprises:
determining branches in said ontology which have been browsed without selecting a service; and
defining the nodes belonging to said branches as being not preferred.

This is a particularly efficient way of taking into account the user behaviour. Those branches which have been browsed but actually have not been found to deliver interesting services so that no service has been selected may be assigned a lower priority by preferring different branches.

According to one embodiment the method further comprises:
running a query corresponding to the node being the current focus or within around a certain area of the current focus of the ontology navigation as a background process while navigating through the ontology, and
displaying the result of said query in response to a user request.

Running a background query reduces the delay if the user decides to view the search results at his current location while navigating through the ontology. The query may be carried out parallel to the navigation through the ontology thereby reducing the delay for displaying the results. According to a specific embodiment the query running in the background not only comprises the query corresponding to the current location of the user but also queries corresponding to nodes close to the current location of the user in the ontology, e.g. within a certain predefined window around the current location. The corresponding result then may be cached and thereby the latency for displaying a query result may be reduced.

According to one embodiment the method further comprises:
displaying by said ontology viewer a sub-ontology defined by a preference domain definition node of said ontology as the set of nodes which are subsumed by said preference domain definition node; and
in response by a user selection selecting a preference domain displaying only those nodes for navigation which belong to said preference domain. The definition of preference domains provides a splitting of the overall ontology into sub-ontologies which can be easier handled and overlooked by the user thereby facilitating a better and more efficient navigation through the ontology.

According to one embodiment the method further comprises:
providing a user interface for defining one or more nodes of said ontology as entry points;
when entering said ontology viewer, offering the user to select one or more of said entry points, and
starting to navigate through said ontology beginning with said selected one or more entry points. The definition of entry points, either alone or in combination with preference domains, allows an efficient navigation by starting the navigation already at a node which is considered by the user as a good starting point.

### BRIEF DESCRIPTION OF THE DRAWINGS

Fig. 1 schematically illustrates an example of a set of base preferences.
Fig. 2A illustrates an example of a display of an ontology viewer.
Fig.2B illustrates another example of a display of an ontology viewer.
Fig. 3 illustrates a system according to an embodiment of the present invention.
Fig. 4 illustrates a flowchart according to an embodiment of the present invention.
Fig. 5 illustrates a prioritization of preferences according to an embodiment of the present invention.
Fig. 6 illustrates a first example of a combined preferences graph.
Fig. 7 illustrates a second example of a combined preferences graph.
Fig. 8 illustrates an example of a redundant preference definition with respect to a given service ontology.
Fig. 9 illustrates a preferences check according to an example of the present invention.
Fig. 10 schematically illustrates preference domain definitions and entry points according to an embodiment of the present invention.

### DETAILED DESCRIPTION

In the following a tool for building preferences according to an embodiment of the present invention will be described. This tool makes use of a graphical user interface which is able to display to a user an ontology which assists him to navigate in an ordered form through the types of services which are offered by a repository.

The repository here may be e.g. the world wide web or any other computer network or single computer where a user may have access to a variety of services, such as e.g. provided by the "semantic web" which promises to be the next generation world wide web and provides semantically classified information to make it easier to find the dedicated service among the ones which are offered. The term "service" here means that the user may perform or may have performed any kind of action such as the display or download of some kind of information, such as entertainment files like music files, movies or other files, the querying of a database like a web shop, or any other kind of service or information which the user may obtain by accessing a single computer or a computer network which provide these services to the user.

To obtain these services the user may access the network or the single computer providing these services by a client terminal such as a personal computer, a laptop, a notebook, a mobile phone, a smart phone, a PDA or any device which can access the repository through a suitable communications link and which may then request the service.

The services which are accessible to the user are classified by one or more attributes. These attributes for the individual services characterize their semantic meaning, and together with the hierarchical relationship among the individual services they form a so-called "ontology" which reflects an explicit (i.e. explicitly defined and assigned) formal (i.e. machine readable and machine understandable, contrary to plain text) specification of the concepts of the available services. This hierarchical relationship may be expressed by an ancestor relationship between attributes, e.g. the attribute music has an ancestor relationship with the attributes "classic" and "Jazz".

An ontology then represents the conceptualization of the attributes assigned to the individual services together with the hierarchical structure between service concepts. An ontology therefore can be used to taxonomically the available services and to make it easier to navigate through them.

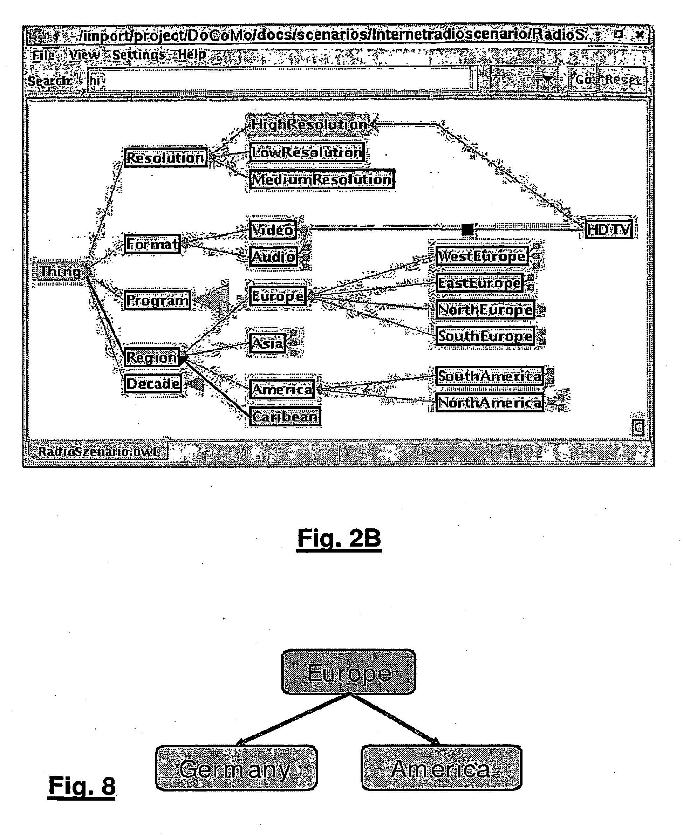

Once an ontology has been created it can be graphically displayed. A basic approach would be to display all attributes of the ontology as nodes in a tree-like view and to display the hierarchical relationship there between as connections between the nodes as shown in Fig. 2A. A somewhat more sophisticated approach which shows the display of an ontology as shown by an ontology authoring tool called ONTOTRACK is described e.g. in T. Liebig and O. Noppens, ONTOTRACK: Fast Browsing and Easy Editing of Large Ontologies in Proc. Of the 2nd Workshop on Evaluation of Ontology-Based Tools; in conjunction with ISWC03, Sanibel Island, FL USA, October 2003. An example of a corresponding display is shown in Fig.2B. One can see from Fig. 2B that the ontology relates to services which are videos or radio programs. The ONTOTRACK tool provides animated expansion and de-expansion of class descendants, zooming, panning, and uses elaborated layout techniques like click-able miniature branches or selective detail views. The screen shot of Fig.2B displays the partially expanded Internet radio ontology from a running example (shaded nodes represent search matches, shaded and boxed nodes indicate an inheritance path).

The tool always shows the semantically correct inheritance hierarchy to the user while trying to optimize the graphical representation. Consequently, ancestors of nodes are rendered as thumbnails if they have not been explicitly expanded (as can be seen e.g. for the ancestors of node HDTV) Other features include instant search highlighting and drag-n-drop editing.

According to an example the ontology viewer is specifically adapted for use with the (relatively small) display of a mobile device. This is achieved by adapting one or more of the key visualization features for usage on small devices. As a result the viewing tool layouts ontologies as directed acyclic graphs and allows their convenient navigation whereupon the characteristics of limited mobile terminals are respected: In particular, ontology layouts are continuously zoomed, centered or panned, nodes are expanded and de-expanded depending on the navigational path and display size. In the tool provides additional graphical highlighting in order to supply the user with auxiliary information, e.g. icons indicate the existence of individuals, triangles and miniature trees approximate not expanded sub-branches, tool-tips show the number of node descendants.

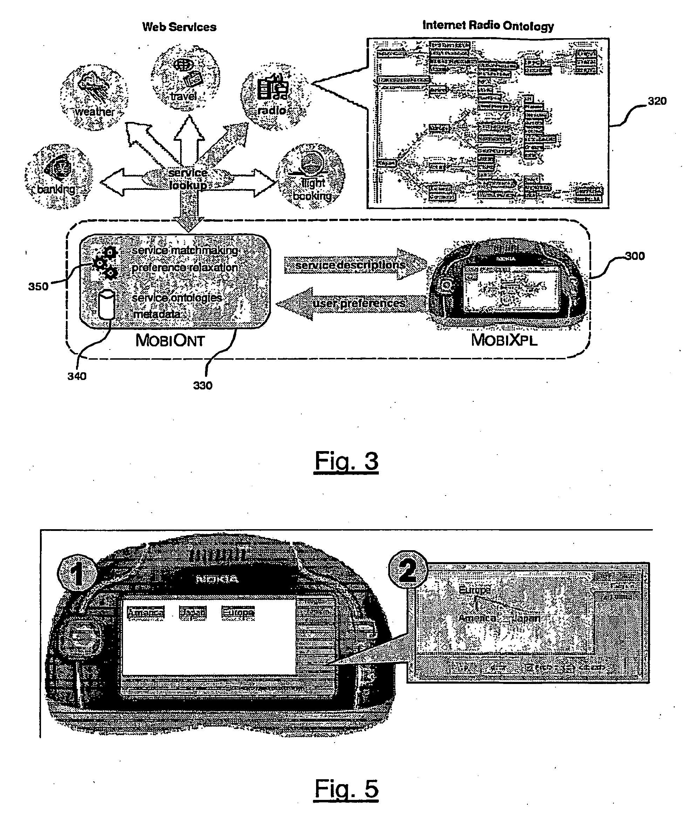

In connection with Fig. 3 it will now explained how the ontology together with the aforementioned ontology viewer can be used to discover services by the user.

Fig. 3 shows a terminal device 300 which has a display, a processing unit and a memory (not shown), and which further has stored in some repository 310 one or more service ontologies which have been created by any ontology authoring tool, e.g. ONTOTRACK described before. Moreover, the terminal device is capable of displaying the one or more ontologies to the user using a viewing tool such as ONTOTRACK described before.

A example of a view onto an ontology on the display of the device is also schematically illustrated in Fig. 3 as a view 320 onto the radio ontology which is a conceptualization of the internet radio services available.

The device 300 may be a laptop, a mobile phone, a smart phone or the like, and it is capable to connect to a network such as the worldwide web or the (future) semantic web for service lookup as shown in Fig. 3. By selecting one of the nodes in the ontology view 320 of Fig. 3, e.g. by clicking with the mouse or by marking the corresponding node with a cursor, there is generated a query to the network for retrieving all the available services which match with the category or the categories assigned to the node which has been selected by the user. If the user then chooses the "display result" option not shown in Fig. 3, then the results of this query (the available services matching the query) will be displayed to the user. If preferences have been defined by the user, then these preferences will be taken into account when deriving the query results. One example of how such preferences are taken into account are described in Balke and Wagner mentioned above. This is done by the discovery unit 330 which comprises a repository 340 which stores the one or more ontologies and - if defined - the user preferences and possibly additional metadata, and further a query unit 350 which generates and dispatches a query based on the selected node of the ontology and the preferences. In addition to this "service matchmaking" the query unit 350 is responsible for performing a query relaxation if applicable, as will become apparent from the description to follow.

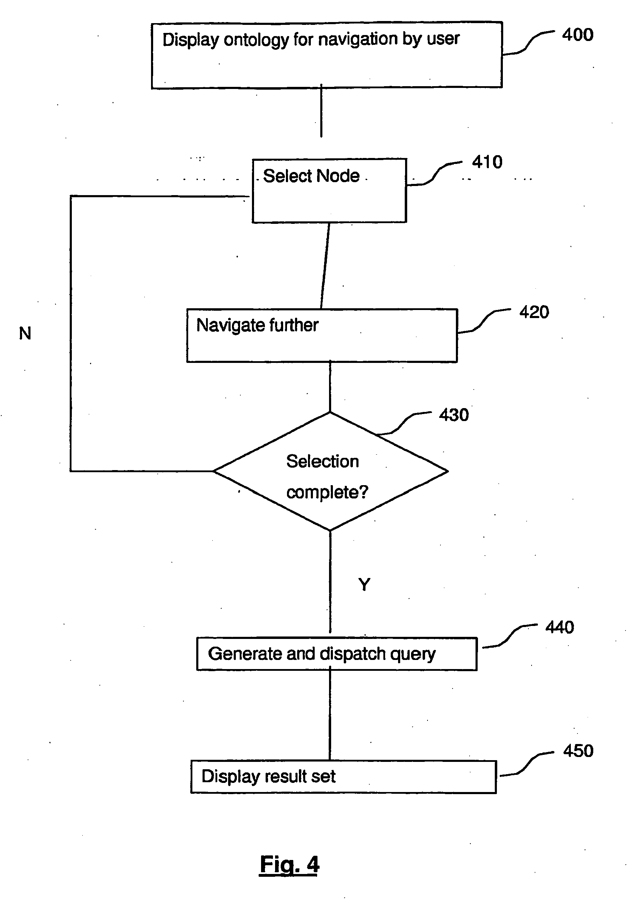

In the following it will be described in connection with the flowchart shown in Fig. 4 how preferences are built or defined according to the invention. In operation 400 there is displayed an ontology by a graphical user interface which allows a user to navigate through the ontology. The user then in operation 410 selects a node for preference building. After selection of the node which can be done by dragging the node with the mouse to a "selection" pane or by otherwise marking it as selected the user may continue to navigate in operation 420, and in operation 430 depending on whether further nodes are to be selected the procedure returns to operation 410 or proceeds with operation 440.

In operation 440 then the one or more nodes which have been selected as preferences define a preferences set which can be used for the generation and dispatching of a query. The thus defined preferences set may be labelled with a user selected identifier such that it can be identified and retrieved among other preference sets which have been defined in a similar manner but labelled differently. Such different preference sets may take into account that depending on the user's situation, e.g. the time or the mood of the user different preference sets should be applied to return the desired results.

In operation 440 then a query is generated and dispatched to e.g. a web services repository as shown in Fig. 3, and then the results are returned and displayed to the user. According to a preferred embodiment the generation and dispatch of a query is a background process which is running while the user navigates through the ontology, and for example for the node which is currently selected by the cursor the query is instantaneously generated and dispatched and the returned results are cached in the terminal device so that they can be displayed without time delay once the user selects the option to display the results (operation 450).

The preference building is performed by selecting nodes in the ontology view which then form a set of preferences. Each selected node thereby has the meaning that the results corresponding to that node (or that "attribute" or "meaning" in the ontology) are preferred over all other results. If more than one nodes have been selected as preference nodes, then this means that each of the thus selected node has equal priority to all other selected nodes but further that each of the selected nodes has priority over all other non-selected nodes. This relationship between the selected nodes is also known as "Pareto Accumulation", i.e. an accumulation of preferences of equal priority.

In addition or alternatively to the Pareto accumulation, however, a user may prioritize between preferences. This will now be explained in connection with Fig. 5. Once the preference nodes have been selected as described in Fig. 4, a user may choose prioritization instead of accumulation. For that purpose between operations 430 and 440 shown in Fig. 4 the user may be presented with an option to prioritize the selected preference nodes. Then a display as shown in Fig. 5 may be shown to the user where on the left-hand side the selected preference nodes (America, Japan, Europe) are displayed. By e.g. using the mouse or any other graphical user interface the user may then define a priority relationship between the selected preference nodes which may then result in a preferences definition as shown in the right-hand side of Fig. 5. In this example Europe is given a higher priority than America and also than Japan. This can be e.g. done by drawing directed arrows between the nodes which then are interpreted by the system that an arrow from A to B means that A has a higher priority than B.

Using such a user interface a set of prioritized preferences can be defined and also be labelled according to the user's desire. It may then be later selected among a plurality of defined and labelled preference definitions. The prioritized preferences result in combined preferences which form a graph having a hierarchical structure. The nodes in this combined graph correspond to nodes in the ontology and can therefore be used to be mapped onto nodes in the ontology to thereby generate a corresponding query since each node in the ontology corresponds to a query because it defines a set of descendant nodes which themselves by their attributes define a result set.

The thus defined preferences set accordingly is then used for generating and dispatching the query. The hierarchically highest preference (i.e. the preference with the highest priority) corresponds to a node in the ontology and thereby defines the most narrow query. It yields a query for results which fully match with the defined preferences. However, if no match is found then the combined preferences graph as shown in Fig. 5 may be used as a graph which defines a relaxation path according to which the search constraints are relaxed to find the next-best results. This is based on the notion that the results corresponding to nodes with lower priority still are close to the desired results.

Based on the combined preferences path as shown in Fig. 5 the next priorities are "Europe" and "Japan", respectively, and accordingly these are used as the relaxed search conditions by referring to the corresponding nodes in the ontology and thereby retrieving the corresponding search results.

It should be mentioned here that a certain node corresponds to a certain result set which is formed by all results which match with the condition defined by this node and the nodes descending from this node. The relationship between a certain node and its ancestors or descendants are defined e.g. by a special language which is one of the basic technologies for the so-called semantic web and which is called OWL (for "Ontology Web Language). An introduction into OWL can be found on http://www.w3.org/TR/owl-features. The formal basis of OWL are Description Logics (DL) as for instance described in F. Baader et al. *The Description Logic Handbook*. Cambridge University Press, 2003. Description Logics allow for a decidable computation of the subsumption relationship between concepts, i.e. given concept A and A' it can be automatically decided whether A and A' are logically equivalent, whether A subsumes A' or vice versa. For all concepts of a given ontology the subsumption relation determines a concept dependency graph where for a concept A the subsumer A is also referred to as ancestor and the concepts subsumed by A are referred to as descendants.

A node of an ontology itself thereby corresponds to a preference once it has been selected because it defines an attribute and thereby a search parameter and because it further excludes all its ancestor nodes (or the corresponding results) from a query and it includes all its descendant nodes (and the corresponding results).

It should be noted that multiple preferences which are respectively formed of a set of nodes having been prioritized may themselves again be prioritized amongst each other. Looking for example at Fig. 1 one can see that there three preferences which have already been defined, namely a "regional" preference indicating a preference of Europe over Japan and America, a "format" preference indicating a preference of the MP3 format over the Real format, and finally a "programmatic" preference indicating the types of program contents which are preferred over others. These "base preferences" already define an explicit priority of some attributes over district other attributes, such as a preference of the attribute "European" over "Japanese" and "American". Between these base preferences, however, also preferences can be defined which may indicate that one base preference such as the preference for the format MP3 over the Real format should be given a higher priority than the "regional" preference as defined in the base preference preferring Europe over America and Japan.

This means that base preferences may be prioritized among each others. Once such a prioritization has been defined the thus resulting prioritization again form a new base preference which may then be subject to a prioritization with other base preferences.

Alternatively to the prioritization between base preferences no prioritization between them may be applied, a case which is referred to as a Pareto accumulation of the base preferences. These two alternatives, Pareto accumulation and prioritization will now be outlined in somewhat more detail in the following.

By stating no explicit priority among the base preferences according to an example the Pareto accumulation may be applied for combining the base preferences. This will now be explained by means of one specific example. For that purpose it will be assumed that the preferences labelled "region" and "format" in Fig. 1 should be combined using the Pareto accumulation. The Pareto-optimality principle has been applied and studied intensively for decades for multi-attribute decision problems in the social and economic sciences. In the present example it is used to handle equally important user preferences. The binary Pareto operator ? that is intuitively defined such that a matching feature tuple v=(v1, v2) can only be preferred to another match w = (w1, w2), if v is better than or equally good as w in every single feature value with 'strictly better' in at least one value.
Formally, let P1 = (A1, <P1) and P2 = (A2, <P2) be two preferences. For x = (x1, y1) and y =(y1, y2) with x, y ∈ dom (A1) X dom(A2) we define x<(P1⊗P2)y ⇔(x1<P1y1 ∧ (x2<P2y2 ∨ x2=y2)) ∨ (x2<P2y2 ∧ (x1<P1y1 ∧ x1=y1)). Therefore P = (A1 u A2, P1⊗P2) is a strict variant of the coordinate-wise order of the Cartesian product (see e.g. B. A. Davey and H. A. Priestley, Introduction to lattices and order, Cambridge Mathematical textbooks 1990) and is called a Pareto preference or the Pareto accumulation P1 and P2.

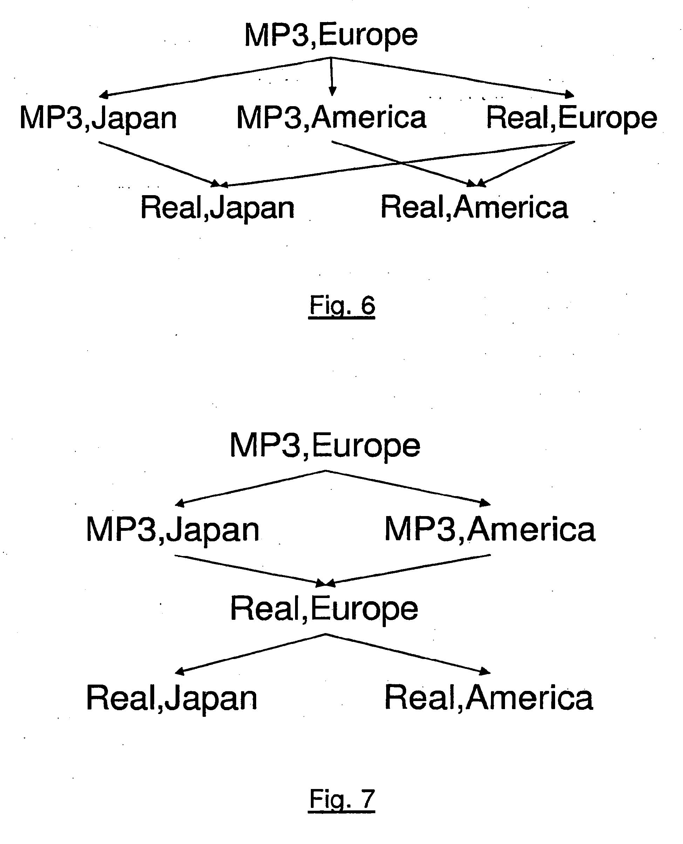

We now revisit the running example of the preferences region and format shown in Fig.1 and consider the case where it is desired to further differentiate between the base preferences Region and Format. Using Pareto accumulation the aggregated preference P1⊗P2 is depicted in Fig. 6. As was discussed above, this preference consists of feature combinations ordered according to the Pareto semantics that treats the two base preferences equally. The combined preferences graph shown in Fig. 6 gives also the relaxation path for relaxing the search conditions. Therefore, the user's first choice consists of a radio station that broadcasts a European program encoded in MP3 followed by next-best matches in stations with lower relevance, e.g. Japanese programs in MP3 or American programs in MP3 or European programs in Real format.

According to one embodiment the combined preferences path as shown in Fig. 6 is generated automatically or in response to a user request once the preferences have been completely defined. The combined preferences path is a hierarchical graph where the base preferences are ordered according to their priority in a single graph. If multiple preferences are to be simultaneously fulfilled (i.e. linked by a logical AND) then they form a single node in this graph. Nodes at the same hierarchical level in this graph are linked by a logical OR, i.e. are to be fulfilled alternatively.

A combined preferences graph as shown in Fig. 6 according to one embodiment defines a relaxation path which is to be followed when relaxing the search conditions in order to increase the result set for a certain search, as will now beexplained in somewhat more detail referring to the example of the combined preferences graph shown in Fig. 6. The search at first starts based on the root node (or the root nodes) of the combined preferences path. If the corresponding query does not deliver sufficient results (e.g. in terms of their number or their relevance for the user), then the next lower hierarchical level in the combined preferences graph may be entered by dispatching a corresponding relaxed query. In case of Fig. 6 this means that at first the query looks for services matching the attribute "Europe" and being of the format "MP3". If no sufficient results are retrieved, then the relaxed query corresponding to the next lower nodes in the graph is generated which is a query looking for MP3 formats from Japan OR for MP3 formats from America OR for Real formats from Europe The three nodes at the lower hierarchical level below the root node thus are linked by a logical OR. If this still does not yield sufficient results then the next-best query is generated based on the next-lower level of the relaxation path as defined by the combined preferences graph, namely looking for Real AND Japan OR for Real AND America, in other words for programs matching the attribute Real in the class format and further matching the region condition of being from Japan or from America. Then, if still no sufficient results are retrieved the least preferred node in the relaxation path will be reached which corresponds to a query looking for programs in the Real format and being either of Japanese or of American origin. According to one embodiment a relaxation path is followed by entering the next preferred level if the user by some input to the terminal indicates that the results from the stricter, non-relaxed version of the query are not satisfactory for him. On each corresponding input from the user the next-preferred preferences set will be entered by following the relaxation path as explained above, and then based on the thus entered relaxed preferences set a corresponding query is generated and dispatched to look for corresponding results.

The foregoing example has illustrated the case where there is no explicit prioritization between the base preferences, in other words the "Pareto accumulation" of the base preferences. However, often some preferences might be considered more important than others. In addition or alternatively to the equal treatment of preferences by Pareto accumulation, a user may therefore use the preference operator & for preference prioritization. Intuitively, if P1 & P2 (i.e. preference P1 is prioritized over P2) then P1 is considered more important than P1. As a consequence there is no compromise in feature matching by P1. P2 is evaluated only where P1 gives several alternatives of equal usefulness, e.g., like in the present case of the choice between Japanese and American radio stations for the "region" preference.

Formally, let P1 = (A1, P1) and P2 = (A2, <P2) be two preferences. For x = (x1, y1) and y =(y1, y2) with x, y ∈ dom (A1) X dom(A2) there may be defined x<(P1&P2)y ⇔ (x1<P1y1) ∨.(x1 = y1 ∧ x2 <P2y2) and claimed that this definition still holds if x1 ∼ y1, i.e. in the case where X1 and Y1 are incomparable. Therefore P = (A1 u A2, P1 & P2) is a strict variant of the lexicographic order of the Cartesian product (see again Davey and Priestley mentioned before) and is called a prioritized preference.

In our specific example it may be assumed that - possibly due to technical constraints - a user wants to express that the encoding of a program is actually more important to him than its origin. Respecting the individual feature preferences for Format and Region, this prioritization can be stated in the single preference expression Format & Region. It will then result in a combined preferences graph as shown in Figure 7.

One can see from Fig. 7 that as requested by the prioritization in the first base preference indicating the general priority of the "format" preference over the "region" preference (cf. Fig. 1), encodings in MP3 are generally preferred over those in the Real format. However, the second base preference for Region, i.e., Europe preferred over Japan etc. (cf. Fig. 1), is also respected albeit with lower priority than the format preference. The combined preference graph also in this embodiment defines a relaxation path which is followed when relaxing the conditions for the search.

In case of Fig. 7 this means that at first the query looks for services matching the attribute "Europe" and being of the format "MP3". If no sufficient results are retrieved, then the relaxed query corresponding to the next lower nodes in the graph is generated which is a query looking for MP3 formats from Japan OR for MP3 formats from America. The two nodes at the next lower hierarchical level thus are linked by a logical OR. If this still does not yield sufficient results then the next-best query is generated based on the next-lower level of the relaxation path as defined by the combined preferences graph, namely looking for Europe AND Real, in other words for programs matching the attribute Europe in the class region and further matching the format condition of being in the Real format. Then, if still no sufficient results are retrieved the least preferred node in the relaxation path will be reached which corresponds to a query looking for programs in the Real format and being either of Japanese or of American origin.

According to one particular example the preferences defined by the user are checked by a checking module in order to eliminate redundancies. The rather complex nature of some ontologies may make it happen that a user selects prioritizations which actually are redundant or not meaningful such as the one shown in Fig. 8 where Europe has been selected as being preferred over Germany. This is not a meaningful preference definition since Germany is a descendent node of the node Europe and therefore it makes no sense to define Europe as being preferred over Germany. It is therefore checked for each priority definition whether its two elements A and B fulfil the relation "A is subsumed by B" or "B is subsumed by A". This can be done by checking the subsumption relationship between A and B by using a Description Logics (DL)-based reasoning framework such as the RACER framework described e.g. in V. Haarslev and R. Möller. RACER: A core inference engine for the Semantic Web. In Proc. of the 2nd Int. Workshop on Evaluation of Ontology-based Tools (EON2003), located at ISWC 2003, pages 27-36, Sanibel Island, FL, USA, October 2003.

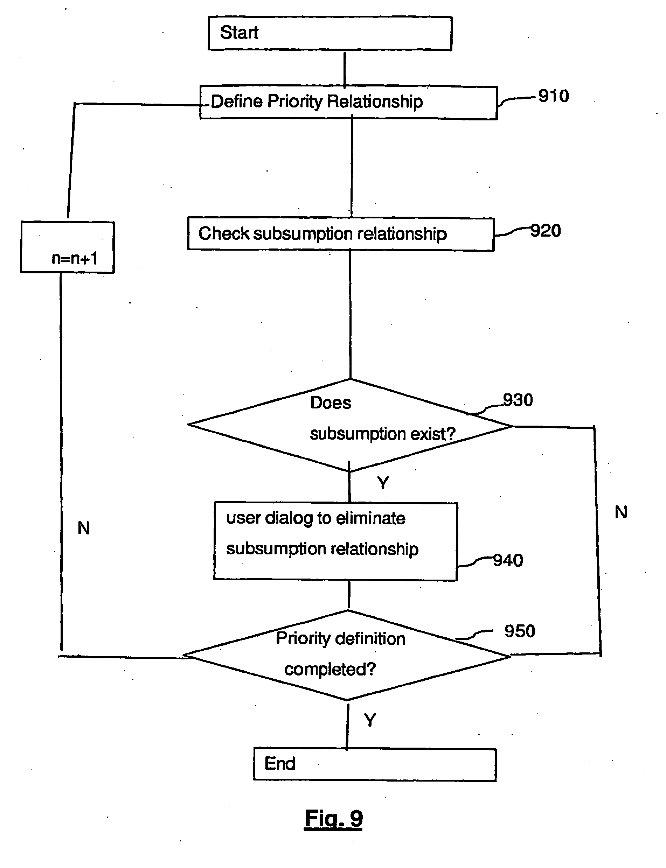

If "A is subsumed by B" or "B is subsumed by A" is found to be the case then the user may be queried whether he wishes to choose the more general term (in case of Fig 8 "Europe") or the more concrete term (in case of Fig. 8 "Germany") as preference. Alternatively the more concrete term (or the more general term, depending on the settings) may be eliminated from the preferences. Preferably the user is informed about such an elimination by a corresponding dialog. Fig. 9 schematically illustrates a flowchart showing the procedure for defining the priority relationship. In operation 910 a priority relationship between two nodes is defined, then in operation 920 it is checked whether there exists a subsumption relationship between these two nodes. The result is evaluated in operation 930, and if the result is to the affirmative then in operation 940 a user dialog as explained before is displayed to enable the user to eliminate the subsumption relationship. The priority definition is repeated until the definitions are completed and operation 950 is answered to the affirmative.

According to an example there is provided an option to the user to switch between Pareto accumulation and prioritization. For a given set of selected preferred nodes it may be possible to thereby switch between the two forms of applying the corresponding set of preferred nodes. In case of a switch from the prioritized version to the Pareto version this means that the priority relationships which have been defined are eliminated and the selected nodes are applied in Pareto accumulation. In case of a switching from Pareto accumulation to prioritization a prioritization which has already once previously been defined may be retrieved or, alternatively, new priorities may be defined.

Once the preference set has been built as described in one of the foregoing embodiments it can be used for service discovery. For that purpose a preference set (possibly one of a plurality of defined preference sets which may be a prioritized one or a Pareto accumulation version) can be applied in two ways. In a first example the preference set may be applied as an additional constraint further to the constraint which is defined by the node which is currently in the focus (e.g. by being highlighted or marked by the cursor) of the user who navigates through the ontology. This means that the result set which would be retrieved by merely selecting a certain node in the ontology is further limited by the preference set which is currently active.

According to a second example the result set is merely defined by the currently active preference set. In this case the returned query result is independent of the current location of the user navigating through the ontology.

According to an example the user may select between both options, using only the preference definitions for determining the result or using them as additional constraints further to the result set as defined by the current location in the ontology.

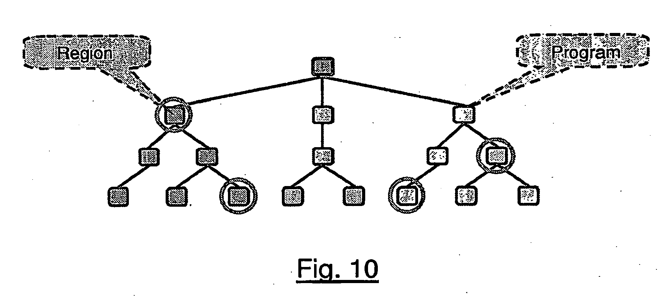

In the following there will be described an embodiment which is particular suitable when dealing with very large and complex ontologies which are difficult to be overlooked by a user in total. In Fig. 7 such a complex ontology is schematically illustrated by a hierarchical structure having three separate sub-trees branching off from a root node. The skilled reader will be readily ableto imagine that more complex structures also can be possible having more parallel sub-trees each having more branches and leaves, and possibly having even multiple root nodes. In such a case it might be extremely difficult for a user to view this complete structure as a whole in an ontology viewer. Therefore, according to this embodiment the ontology viewer is "initialized" by defining so-called "preference domain definitions", in the case of Fig. 10 these correspond to the nodes "region" and program". Each of these preference domain definitions defines a domain which corresponds to a "sub-ontology" including all the nodes subsumed by the node defining the preference domain, in case of Fig. 10 the nodes "region" and "program". Effectively this means that a preference domain definition selects a subset of the overall ontology through selecting the descendent nodes of the node defining the preference domain, and thereby selecting a fraction of the overall ontology which is easier overlooked by the user. When starting the ontology viewer the preference domain definitions may be shown to the user and the user may then select the preference domain which is of interest for him and then the viewer starts navigating through the corresponding sub-ontology rather than through the complete overall ontology.

The preference domain definitions may be defined for each user separately. Moreover, different types of preference domain settings may be defined depending on the type of the user. E.g. there may be a distinction between a "novice user" and an "expert user", and this distinction could mean that a novice user is merely offered a quite reduced sub-ontology which may consist only of the tree starting with the node "program", and an expert user may have additionally displayed further ontology trees such as the "region" tree or the "format" tree. Accordingly different combinations of preference domain settings may be defined, either predefined without any possibility to change them, or configurable by the user himself. A user may then define a plurality of preference domain settings, assign them names or labels, and when starting the ontology viewer he may then be offered his settings and may choose one of them which then is opened by opening the corresponding sub-ontology for navigation.

According to one embodiment there is further provided an option to the user where he can define one more "entry points" into the ontology or into a sub-ontology. An entry point is a point where the navigation focus lies when an ontology or a sub-ontology as defined by the preference domain definitions is entered by an ontology viewer for navigation. Turning now again to the example of Fig.10, the preference domain definitions may be "Region" and "Program". In addition to these preference domain definition there may be defined one or more entry points which may coincide but not necessarily have to coincide with the preference domain definitions. These entry points are indicated in Fig. 10 as encircled nodes. When starting the viewer the used may then be shown a list of the possible entry points, either together with the preference domain definitions or after having selected a certain preference domain for navigation, and he may then select an entry point and then start navigating beginning from this entry point. This means that when starting navigation the entry point will be in the focus of the display rather than the top-level node of the preference domain which has been selected for navigation.

It should be mentioned that a thus defined entry point may coincide but not necessarily coincides with a node selected as preferred node. A node defined as an entry point can in addition to its entry point function be selected as a preferred node when setting preferences for queries as was explained in connection with previous embodiments..

When the user starts browsing the ontology beginning with the selected entry point he may then choose a preference set for defining a query. The user may be provided with a list of already defined preference sets and he may select one set from the list. Alternatively the user may choose the option to define a new preference set and may use the newly defined preference set for the query generation.

The user may further be provided with an option to choose whether the selected preference set should be used as additional constraints in addition to the current node being the focus of the ontology browsing or whether the preference set solely should define the query independent of which node currently being the focus of the user browsing the ontology.

Once after all those parameters have been defined the user may explicitly initiate the dispatching of the query and the results are then displayed to the user. Alternatively the query corresponding to the currently chosen set of parameters is running as a background process with the results being cached and in response to a user command the already retrieved results are displayed to the user.

If the result set is empty or does not show satisfactory results then the conditions set by the query may be relaxed. The preferences may be relaxed by following the graph of the combined preferences which defines a relaxation path as has been described before.

User preferences are defined based on the user's navigation through the ontology. For example a navigation path is tracked by a tracking module. The tracking module follows the user's path and is configured to notice when a user has navigated down along a path to nodes at which he finally selected no service and then moves upward again to ancestral nodes. The nodes where those branches of the ontology are located which have been explored by the user during browsing but for which no services have been selected may be "discarded" by defining a preference which gives lower priority to such nodes compared to nodes which belong to branches from which finally services have been selected.

Alternatively or additionally the tracking module may count how often certain nodes are browsed. If a certain threshold is reached then the corresponding node is selected automatically as a preferred node.

The aforementioned operations can be used to dynamically refine the preferences structure without explicit user interaction by taking into account the specific behaviour of the user.

In addition to the automatic refining of the user preferences there may be defined explicitly user specific characteristics which in addition to preferences may consist e.g. in a user specific set of entry points used for entering the ontology browsing. Moreover user profiles may be defined which specifically define a subset of an ontology specific for a certain user. The user then will only see the thus defined subset when browsing the ontology.

According to an example as for preference adjustments, the history of a user's navigation path can be used to adjust the personal entry points of a user to the ontology. This can be preformed for example in the following manner.

On issuing a query (preference building + submitting a query), the last visited nodes of the service ontology become the new ontology entry points. This means that the tracking module once a query has been submitted determines which nodes have been visited just before the query submission,and these nodes may be choosen as new entry points. E.g. a predefined number (which may be set by the user) of last visited nodes may be chosen as new entry points. According to an example the selection of the new entry points may be performed automatically in response to a query submission. Alternatively the user may at first be asked for confirmation whether the new entry points should be registered by the ontology viewer.

According to a further example the nodes that were formerly visited most frequently (according to navigation history, tracking module) become the new ontology entry points. Again this may be done automatically or in response to a confirmation by the user.

Further or alternatively to the above, a feedback from the final user selection can be used to derive new entry points as will be described in the following.

After a query is issued resulting matches are presented to the user as an ordered list of best matches. The list is ordered in descendant order starting with the best matches followed by next best matches. Here, it is not guarantied that a perfect match is delivered. Instead matches might have resulted from preference relaxations performed during service discovery. Such matches resulting from relaxed preferences may be indicated when being displayed to the user as resulting from relaxed preferences.

If the user now selects a service which corresponds to a relaxed preference, then this actually corresponds to an (implicit) navigation through a relaxation path as defined by the combined preferences graph and as was explained in connection with Figures 6 and 7. This is because such relaxation steps represent implicit navigational steps in the ontology, if a relaxation of 'preferring A over B' is relaxed, i.e. a search on B is performed if a search on A was unsuccessful, an implicit navigation from A to B is performed. Accordingly adjustments of entry points can not only be made in assessing the explicit navigational steps made by the user but also by assessing the implicit ones which consist in selecting a query result corresponding to a relaxed condition. The corresponding implicit navigational steps through the ontology may be used for defining new entry points in the same manner as the explicit steps. In the present example this could e.g. mean that B representing the relaxed condition could be chosen as a new entry point because it corresponds to the last visitied node of the service ontology which has been visited by the implicit navigation done by selecting a result corresponding to a relaxed preference.

It will be readily understood that an apparatus according to the present invention may be implemented by any computer or computing device which is suitably programmed to operate as described in the foregoing embodiments. Furthermore, embodiments of the invention may also be implemented by a computer program or computer program code which enables a computer or a computing device when being executed to act as an apparatus according to the embodiments described hereinbefore. Computer or computing device thereby may mean any device comprising one or more microprocessors making the device programmable to act as mentioned before. Examples of such devices are Personal Computers, notebooks, PDAs, mobile phones, smartphones, or the like. Moreover individual modules of embodiments of the invention as described hereinbefore may be implemented by program modules comprising computer program code which when being executed implements the function of the described module. An article of manufacture implementing an embodiment of the invention may comprise a data carrier or any medium having stored thereon or embodying computer program code which enables a computer or a computing device to act as an apparatus as described in connection with the embodiments illustrated hereinbefore.

## Claims

1. A method for providing a user interface for enabling a user to define preferences which are to be used for the discovery of services from a service catalogue, said services being categorized according to an ontology assigning one or more attributes to the individual services, said method comprising:
providing an ontology viewer for displaying said ontology as a graph, the nodes in said graph corresponding to attributes in said ontology, said ontology viewer allowing said user to navigate through said ontology;
receiving a user input from said user when navigating through said ontology for selecting one or more nodes as preferences to thereby define attributes which are preferred attributes of the desired services to be discovered,
generating and dispatching a query to discover said desired services based on said selected preferred attributes,
said method further comprising:
providing a graphical user interface for receiving a user input for defining a priority relationship between one or more of said selected nodes to define preferences,
tracking the navigation of the user through said ontology,
automatically, generating preferences based on said tracked user navigation, determining branches in said ontology which have been browsed without selecting a service; and
defining the nodes belonging to said branches as being not preferred.

2. _The method of claim 1, wherein said defined relationship is either prioritizing one of said nodes against another one or assigns equal priority to them.

3. The method of claim 2, wherein said defined relationship is definable also between already defined preferences to thereby define combined preferences.

4. The method of one of claims 1, 2 or 3 wherein a combined preferences graph is derived from said combined preferences to display said combined preferences in a single graph the nodes of which represent preference combinations having the same priority.

5. The method of claim 4, further comprising:
using the combined preferences graph as a definition of a relaxation path for relaxing the preferences if no or no sufficient results are retrieved based on the conditions defined by said preferences.

6. The method of one of claims 1 to 5, further comprising:
shrinking the nodes distant from the node being the navigation focus and expanding nodes of said ontology close to said navigation focus when displayed by said ontology viewer.

7. The method of one of the preceding claims, further comprising: running a query corresponding to the node being the current focus or within around a certain area of the current focus of the ontology navigation as a background process while navigating through the ontology, and displaying the result of said query in response to a user request.

8. The method of one of the preceding claims, further comprising:
displaying by said ontology viewer a sub-ontology defined by a preference domain definition node of said ontology as the set of nodes which are subsumed by said preference domain definition node; and in response by a user selection selecting a preference domain displaying only those nodes for navigation which belong to said preference domain.

9. The method of one of the preceding claims further comprising: providing a user interface for defining one or more nodes of said ontology as entry points;
when entering said ontology viewer, offering the user to select one or more of said entry points, and
starting to navigate through said ontology beginning with said selected one or more entry points.

10. An apparatus for providing a user interface for enabling a user to define preferences which are to be used for the discovery of services from a service catalogue, said services being categorized according to an ontology assigning one or more attributes to the individual services, said apparatus comprising:
an ontology viewing module for displaying said ontology as a graph, the nodes in said graph corresponding to attributes in said ontology, said ontology viewer allowing said user to navigate through said ontology;
a receiving unit for receiving a user input from said user when navigating through said ontology for selecting one or more nodes as preferences to thereby define attributes which are preferred attributes of the desired services to be discovered,
a module for generating and dispatching a query to discover said desired services based on said selected preferred attributes;
a graphical user interface module for receiving a user input for defining a priority relationship between one or more of said selected nodes to define preferences,
a module for tracking the navigation of the user through said ontology, automatically generating preferences based on said tracked user navigation;
a module for determining branches in said ontology which have been browsed without selecting a service: and
defining the nodes belonging to said branches as being not preferred

11. The apparatus of claim 10, wherein said defined relationship is either prioritizing one of said nodes against another one or assigns equal priority to them.

12. The apparatus of claim 11, wherein said defined relationship is definable also between already defined preferences to thereby define combined preferences.

13. The apparatus of one of claims 10, 11 or 12, further comprising:
a module for deriving a combined preferences graph from said combined preferences to display said combined preferences in a single graph the nodes of which represent preference combinations having the same priority.

14. The apparatus of claim 13, further comprising:
a module for using the combined preferences graph as a definition of a relaxation path for relaxing the preferences if no or no sufficient results are retrieved based on the conditions defined by said preferences.

15. The apparatus of one of claims 10 to 14, further comprising:
a module for shrinking the nodes distant from the node being the navigation focus and expanding nodes of said ontology close to said navigation focus when displayed by said ontology viewer.

16. The apparatus of one of claims 10 to 15, further comprising:
a module for running a query corresponding to the node being the current focus or within around a certain area of the current focus of the ontology navigation as a background process while navigating through the ontology, and
displaying the result of said query in response to a user request.

17. The apparatus of one of claims 10 to 16, further comprising:
a module for displaying by said ontology viewer a sub-ontology defined by a preference domain definition node of said ontology as the set of nodes which are subsumed by said preference domain definition node; and in response by a user selection selecting a preference domain displaying only those nodes for navigation which belong to said preference domain.

18. The apparatus of one of claims 10 to 17, further comprising:
a module for providing a user interface for defining one or more nodes of said ontology as entry points;
when entering said ontology viewer, offering the user to select one or more of said entry points, and
starting to navigate through said ontology beginning with said selected one or more entry points.

19. A computer program which when being executed on a computer enables said computer to carry out a method according to one of claims 1 to 9.

## Patentansprüche

1. Verfahren zum Bereitstellen eines Benutzerinterfaces, um einen Benutzer in die Lage zu versetzen, Präferenzen zu definieren, die verwendet werden sollen,
um Services in einem Servicekatalog zu entdecken, wobei die Services gemäß einer Ontologie kategorisiert sind, die ein oder mehrere Attribute den inviduellen Services zuweist, wobei das Verfahren aufweist:
Bereitstellen eines Ontologie-Viewers zum Anzeigen der Ontologie als Graph, wobei die Knoten in dem Graph den Attributen in der Ontologie entsprechen, wobei der Ontologie-Viewer es dem Benutzer erlaubt, durch die Ontologie zu navigieren;
Empfangen eines Benutzer-Input von dem Benutzer, wenn durch die Ontologie navigiert wird, um einen oder mehrere Knoten als Präferenzen auszuwählen, um **dadurch** Attribute zu definieren, die bevorzugte Attribute der gewünschten zu entdeckenden Services sind,
Erzeugen und Absenden einer Suchanfrage, um die gewünschten Services basierend auf den ausgewählten Attributen zu entdecken, wobei das Verfahren ferner aufweist:
Bereitstellen eines graphischen Benutzerinterfaces, um einen Benutzer-Input zu empfangen, um eine Prioritätsbeziehung zwischen einem oder mehreren der ausgewählten Knoten zu definieren, um Präferenzen zu definieren, Tracken der Navigation des Benutzers durch die Ontologie,
Automatisches Erzeugen von Präferenzen basierend auf der getrackten Benutzernavigation,
Ermitteln von Zweigen in der Ontologie, die ohne das Auswählen eines Services gebrowst wurden; und
Definieren der Knoten, die zu den Zweigen gehören, als nicht bevorzugt.

2. Verfahen nach Anspruch 1, wobei die definierte Beziehung entweder einen der Knoten gegenüber anderen Knoten priorisiert oder ihnen gleiche Priorität zuweist.

3. Verfahen nach Anspruch 2, wobei die definierte Beziehung auch zwischen bereits definierten Präferenzen definierbar ist, um **dadurch** kombinierte Präferenzen zu definieren.

4. Verfahren nach einem der Ansprüche 1, 2 oder 3, wobei ein Graph kombinierter Präferenzen abgeleitet wird aus den kombinierten Präferenzen, um die kombinierten Präferenzen in einem einzelnen Graph anzuzeigen, dessen Knoten Präferenzkombinationen mit gleicher Priorität repräsentieren.

5. Verfahren nach Anspruch 4, ferner aufweisend:
Verwenden des Graphs kombinierter Präferenzen als Definition eines Relaxationspfades zum Relaxieren der Präferenzen, falls kein oder keine ausreichenden Resultate basierend auf den durch die Präferenzen definierten Bedingungen aufgefunden werden.

6. Verfahren nach einem der Ansprüche 1 bis 5, ferner aufweisend:
Schrumpfen der Knoten, die entfernt von demjenigen Knoten liegen, der der Navigationsfokus ist und Expandieren der Knoten der Ontologie in der Nähe des Navigationsfokus, wenn sie durch den Ontologieviewer angezeigt werden.

7. Verfahren nach einem der vorhergehenden Ansprüche, ferner aufweisend:
Durchführen einer Suchanfrage entsprechend dem Knoten, der momentan der Fokus ist oder innerhalb eines bestimmten Bereichs des momentanen Fokusses der Ontologienavigation als Hintergrundprozess, während durch die Ontologie navigiert wird, und
Anzeigen des Ergebnisses der Suchanfrage in Reaktion auf eine Benutzeranforderung.

8. Verfahren nach einem der vorhergehenden Ansprüche, ferner aufweisend:
Anzeigen einer Sub-Ontologie durch den Ontologie-Viewer, die definiert wird durch einen Präferenz-Domänen-Definitionsknoten der Ontologie als der Satz von Knoten, die durch den Präferenz-Domänen-Definitionsknoten subsumiert werden; und
in Reaktion auf eine Benutzerauswahl, die eine Präferenzdomäne auswählt, anzeigen von nur denjenigen Knoten für die Navigation, die zu der Präferenzdomäne gehören.

9. Verfahren nach einem der vorhergehenden Ansprüche, ferner aufweisend:
Bereitstellen eines Benutzerinterfaces zum Definieren von einem oder mehreren Knoten der Ontologie als Eintrittspunkte;
wenn in den Ontologieviewer eingetreten wird, Anbieten der Auswahl von einem oder mehreren der Eintrittspunkte an den Benutzer, und Beginnen des Navigierens durch die Ontologie beginnend mit dem ausgewählten einen oder mehreren Eintrittspunkten.

10. Vorrichtung zum Bereitstellen eines Benutzerinterfaces, um einen Benutzer in die Lage zu versetzen, Präferenzen zu definieren, die verwendet werden sollen, um Services in einem Servicekatalog zu entdecken, wobei die Services gemäß einer Ontologie kategorisiert sind, die ein oder mehrere Attribute den inviduellen Services zuweist, wobei die Vorrichtung aufweist:
Bereitstellen ein Ontologie-Ansichts-Modul zum Anzeigen der Ontologie als Graph, wobei die Knoten in dem Graph den Attributen in der Ontologie entsprechen, wobei der Ontologie-Viewer es dem Benutzer erlaubt, durch die Ontologie zu navigieren;
eine Empfangseinheit zum Empfangen eines Benutzer-Input von dem Benutzer, wenn durch die Ontologie navigiert wird, um einen oder mehrere Knoten als Präferenzen auszuwählen, um **dadurch** Attribute zu definieren, die bevorzugte Attribute der gewünschten zu entdeckenden Services sind,
ein Modul zum Erzeugen und Absenden einer Suchanfrage, um die gewünschten Services basierend auf den ausgewählten Attributen zu entdecken;
ein graphisches Benutzerinterface-Modul um einen Benutzer-Input zu empfangen, um eine Prioritätsbeziehung zwischen einem oder mehreren der ausgewählten Knoten zu definieren, um Präferenzen zu definieren,
ein Modul zum Tracken der Navigation des Benutzers durch die Ontologie, automatisches Erzeugen von Präferenzen basierend auf der getrackten Benutzernavigation,
ein Modul zum Ermitteln von Zweigen in der Ontologie, die ohne das Auswählen eines Services gebrowst wurden; und
Definieren der Knoten, die zu den Zweigen gehören, als nicht bevorzugt.

11. Vorrichtung nach Anspruch 10, wobei die definierte Beziehung entweder einen der Knoten gegenüber anderen Knoten priorisiert oder ihnen gleiche Priorität zuweist.

12. Vorrichtung nach Anspruch 11, wobei die definierte Beziehung auch zwischen bereits definierten Präferenzen definierbar ist, um **dadurch** kombinierte Präferenzen zu definieren.

13. Vorrichtung nach einem der Ansprüche 10, 11 oder 12, ferner aufweisend:
ein Modul zum Ableiten eines kombinierten Präferenzgraphen aus den kombinierten Präferenzen, um die kombinierten Präferenzen in einem einzigen Graph anzuzeigen, dessen Knoten Präferenzkombinationen mit gleicher Priorität repräsentieren.

14. Vorrichtung nach Anspruch 13, ferner aufweisend:
ein Modul zum Verwenden des Graphs kombinierter Präferenzen als Definition eines Relaxationspfades zum Relaxieren der Präferenzen, falls kein oder keine ausreichenden Resultate basierend auf dem durch die Präferenzen definierten Bedingungen aufgefunden werden.

15. Vorrichtung nach einem der Ansprüche nach einem der Ansprüche 10 bis 14,
ferner aufweisend:
ein Modul zum Schrumpfen der Knoten, die entfernt von demjenigen Knoten liegen, der der Navigationsfokus ist und Expandieren der Knoten der Ontologie in der Nähe des Navigationsfokus, wenn sie durch den Ontologieviewer angezeigt werden.

16. Vorrichtung nach einem der Ansprüche 10 bis 15, ferner aufweisend:
ein Modul zum Durchführen einer Suchanfrage entsprechend dem Knoten, der momentan der Fokus ist oder innerhalb eines bestimmten Bereichs des momentanen Fokusses der Ontologienavigation als Hintergrundprozess, während durch die Ontologie navigiert wird, und
Anzeigen des Ergebnisses der Suchanfrage in Reaktion auf eine Benutzeranforderung.

17. Vorrichtung nach einem der Ansprüche 10 bis 16, ferner aufweisend:
ein Modul zum Anzeigen einer Sub-Ontologie durch den Ontologie-Viewer, die definiert wird durch einen Präferenz-Domänen-Definitionsknoten der Ontologie als der Satz von Knoten, die durch den Präferenz-Domänen-Definitionsknoten subsumiert werden.

18. Vorrichtung nach einem der Ansprüche 10 bis 17, ferner aufweisend:
ein Modul zum Bereitstellen eines Benutzerinterfaces zum Definieren von einem oder mehreren Knoten der Ontologie als Eintrittspunkte;
wenn in den Ontologieviewer eingetreten wird, Anbieten der Auswahl von einem oder mehreren der Eintrittspunkte an den Benutzer, und Beginnen des Navigierens durch die Ontologie beginnend mit dem ausgewählten einen oder mehreren Eintrittspunkten.

19. Computerprogramm, das, wenn es auf einem Computer ausgeführt wird, den Computer in die Lage versetzt, ein Verfahren gemäß einem der Ansprüche 1 bis 9 auszuführen.

## Revendications

1. Procédé destiné à fournir une interface utilisateur pour permettre à un utilisateur de définir des préférences qui doivent être utilisées pour la découverte de services à partir d'un catalogue de services, lesdits services étant catégorisés selon une ontologie affectant un ou plusieurs attributs aux services individuels, ledit procédé consistant à :
fournir un dispositif de visualisation d'ontologie pour afficher ladite ontologie sous forme de graphique, les noeuds dans ledit graphique correspondant à des attributs dans ladite ontologie, ledit dispositif de visualisation d'ontologie permettant audit utilisateur de naviguer à travers ladite ontologie ;
recevoir une entrée utilisateur dudit utilisateur pendant la navigation à travers ladite ontologie pour choisir un ou plusieurs noeuds en tant que préférences pour définir ainsi des attributs qui sont les attributs préférés des services à découvrir souhaités ;
générer et envoyer une demande pour découvrir lesdits services souhaités sur la base desdits attributs préférés sélectionnés,
ledit procédé consistant en outre à :
fournir une interface utilisateur graphique pour recevoir une entrée utilisateur pour définir une relation de priorité entre un ou plusieurs desdits noeuds sélectionnés pour définir des préférences,
suivre la navigation de l'utilisateur à travers ladite ontologie,
générer automatiquement des préférences sur la base de ladite navigation d'utilisateur suivie,
déterminer des ramifications dans ladite ontologie qui ont été explorées sans sélectionner de service ; et
définir les noeuds appartenant auxdites ramifications comme n'étant pas préférés.

2. Procédé selon la revendication 1, dans lequel ladite relation définie consiste à prioriser un desdits noeuds par rapport à un autre ou bien leur affecter une priorité égale.

3. Procédé selon la revendication 2, dans lequel ladite relation définie est également définissable entre des préférences déjà définies pour définir ainsi des préférences combinées.

4. Procédé selon une des revendications 1, 2 ou 3, dans lequel un graphique de préférences combinées est dérivé desdites préférences combinées pour afficher lesdites préférences combinées sur un seul graphique dont les noeuds représentent des combinaisons de préférences ayant la même priorité.

5. Procédé selon la revendication 4, consistant en outre à :
utiliser le graphique des préférences combinées comme une définition d'une trajectoire de relaxation pour relaxer les préférences si aucun résultat ou des résultats insuffisants sont récupérés sur la base des conditions définies par lesdites préférences.

6. Procédé selon une des revendications 1 à 5, consistant en outre à :
rétrécir les noeuds distants du noeud qui est la cible de navigation et étendre les noeuds de ladite ontologie proches de ladite cible de navigation lorsqu'elle est affichée par ledit dispositif de visualisation d'ontologie.

7. Procédé selon une des revendications précédentes, consistant en outre à :
procéder à une requête correspondant au noeud étant la cible actuelle ou aux environs d'une certaine zone de la cible actuelle de la navigation de l'ontologie en tant que processus d'arrière-plan tout en naviguant à travers l'ontologie, et
afficher le résultat de ladite requête en réponse à une demande utilisateur.

8. Procédé selon une des revendications précédentes, consistant en outre à :
afficher au moyen dudit dispositif de visualisation d'ontologie une sous-ontologie définie par un noeud de définition de domaine de préférences de ladite ontologie en tant que l'ensemble de noeuds qui sont subsumés par ledit noeud de définition de domaine de préférences ; et
en réponse à une sélection utilisateur, sélectionner un domaine de préférences affichant uniquement ces noeuds pour navigation qui appartiennent audit domaine de préférences.

9. Procédé selon une des revendications précédentes consistant en outre à :
fournir une interface utilisateur pour définir un ou plusieurs noeuds de ladite ontologie comme points d'entrée ;
lors de l'entrée dans ledit dispositif de visualisation d'ontologie, offrir à l'utilisateur de choisir un ou plusieurs desdits points d'entrée, et
commencer à naviguer à travers ladite ontologie en commençant par ledit ou lesdits points d'entrée sélectionnés.

10. Appareil destiné à fournir une interface utilisateur pour permettre à un utilisateur de définir les préférences qui doivent être utilisées pour la découverte de services à partir d'un catalogue de services, lesdits services étant catégorisés selon une ontologie affectant un ou plusieurs attributs aux services individuels, ledit appareil comprenant :
un module de visualisation d'ontologie pour afficher ladite ontologie sous la forme d'un graphique, les noeuds dans ledit graphique correspondant aux attributs dans ladite ontologie, ledit dispositif de visualisation d'ontologie permettant audit utilisateur de naviguer à travers ladite ontologie ;
une unité de réception pour recevoir une entrée utilisateur dudit utilisateur pendant la navigation à travers ladite ontologie pour choisir un ou plusieurs noeuds comme préférences pour définir ainsi des attributs qui sont les attributs préférés des services à découvrir souhaités ;
un module pour générer et envoyer une requête pour découvrir lesdits services souhaités sur la base desdits attributs préférés sélectionnés ;
un module d'interface utilisateur graphique pour recevoir une entrée utilisateur pour définir une relation de priorité entre un ou plusieurs desdits noeuds sélectionnés pour définir des préférences ;
un module pour suivre la navigation de l'utilisateur à travers ladite ontologie, générer automatiquement des préférences sur la base de ladite navigation utilisateur suivie ;
un module pour déterminer des ramifications dans ladite ontologie qui ont été explorées sans sélectionner de service ; et
définir les noeuds appartenant auxdites ramifications comme n'étant pas préférés.

11. Appareil selon la revendication 10, dans lequel ladite relation définie consiste à prioriser un desdits noeuds par rapport à un autre ou à leur attribuer une priorité égale.

12. Appareil selon la revendication 11, dans lequel ladite relation définie est également définissable entre les préférences déjà définies pour définir ainsi des préférences combinées.

13. Appareil selon une des revendications 10, 11 ou 12, comprenant en outre : un module pour dériver un graphique des préférences combinées à partir desdites préférences combinées pour afficher lesdites préférences combinées sur un simple graphique dont les noeuds représentent des combinaisons de préférences ayant la même priorité.

14. Appareil selon la revendication 13, comprenant en outre :
un module pour utiliser le graphique des préférences combinées comme une définition d'une trajectoire de relaxation pour relaxer les préférences si aucun résultat ou des résultats insuffisants sont récupérés sur la base des conditions définies par lesdites préférences.

15. Appareil selon une des revendications 10 à 14, comprenant en outre :
un module pour rétrécir les noeuds distants du noeud qui est la cible de navigation et étendre les noeuds de ladite ontologie proches de ladite cible de navigation lorsqu'elle est affichée par ledit dispositif de visualisation d'ontologie.

16. Appareil selon une des revendications 10 à 15, comprenant en outre :
un module pour procéder à une requête correspondant au noeud qui est la cible courante ou aux environs d'une certaine zone de la cible actuelle de la navigation de l'ontologie en tant que processus d'arrière-plan tout en naviguant à travers l'ontologie, et
afficher le résultat de ladite requête en réponse à une demande utilisateur.

17. Appareil selon une des revendications 10 à 16, comprenant en outre :
un module pour affichage par ledit dispositif de visualisation d'ontologie d'une sous-ontologie définie par un noeud de définition de domaine de préférences de ladite ontologie comme l'ensemble de noeuds qui ont été subsumés par ledit noeud de définition de domaine de préférences ; et
en réponse à une sélection utilisateur, sélectionner un domaine de préférences affichant uniquement ces noeuds pour navigation qui appartiennent audit domaine de préférences.

18. Appareil selon une des revendications 10 à 17, comprenant en outre :
un module pour fournir une interface utilisateur pour définir un ou plusieurs noeuds de ladite ontologie comme des points d'entrée ;
lors de l'entrée dans ledit dispositif de visualisation d'ontologie, offrir à l'utilisateur de sélectionner un ou plusieurs desdits points d'entrée, et
commencer à naviguer à travers ladite ontologie en commençant par ledit ou lesdits points d'entrée sélectionnés.

19. Programme informatique qui, lorsqu'il est exécuté sur un ordinateur, permet audit ordinateur d'effectuer un procédé selon une des revendications 1 à 9.
